## Europäisches Patentamt
## European Patent Office
## Office européen des brevets

(11) Veröffentlichungsnummer: **0 353 337**
**A1**

(12) # EUROPÄISCHE PATENTANMELDUNG

(21) Anmeldenummer: 88113290.6

(51) Int. Cl.4: **G01P 3/487**

(22) Anmeldetag: 17.08.88

(30) Priorität: 15.06.88 DE 3820369

(43) Veröffentlichungstag der Anmeldung:
07.02.90 Patentblatt 90/06

(84) Benannte Vertragsstaaten:
**DE FR GB IT SE**

(71) Anmelder: **VDO Adolf Schindling AG**
**Gräfstrasse 103**
**D-6000 Frankfurt/Main 90(DE)**

(72) Erfinder: **Neidhardt, Klaus-Jürgen**
**Arnsburger Strasse 50**
**D-6000 Frankfurt/Main(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Kreisringförmiger Rotationskörper mit permanenten Magnetpolen für Drehzahlsensoren.**

(57) Die Erfindung betrifft einen permanent-magnetischen Rotationskörper (12) für Reedkontakt- und Hallgeber oder andere magnetische Schaltelemente von Drehzahlsensoren und ähnlichen elektrischen Geräten, bei dem ohne wesentliche Leistungseinbußen viel permanent-magnetisches Material eingespart werden kann, um die Herstellungskosten zu senken, was insbesondere bei der Drehzahlmessung an Wellen oder ähnlichen Drehteilen mit einem großen Durchmesser von Interesse ist. Längs des Umfangs eines Kreisringkörpers (12) aus einem leichten, harten, bruchfesten Kunststoff sind in konstanten Winkelabständen meistens mehrere segmentförmige Perma # SHY # nentmagnete (10) eingelassen, deren nach außen oder oben gewendeten, freien Flächen über die gleiche Polarität verfügen. Diese Flächen weisen zusätzlich in Umfangsrichtung des Kreisringkörpers ihre größte Ausdehnung auf, während die Ausdehnung in der dazu senkrechten Richtung parallel zur Rotationsachse nur halb so groß ist.

EP 0 353 337 A1

## Kreisringförmiger Rotationskörper mit permanenten Magnetpolen für Drehzahlsensoren

Die Erfindung betrifft einen kreisringförmigen Rotationskörper an einer Welle von einigen Zentimetern Durchmesser für Drehzahlsensoren, bei dem längs einer Kreisbahn in konstantem Abstand permanente Magnetpole wirksam sind.

Aus der Firmenschrift: "VDO Information", Abschnitt: "Drehzahlsensoren", Seiten 2 bis 10, ist z. B. bekannt, daß innerhalb eines Kraftfahrzeuges zumindest ein Anteil der Sensoren in einem großen Temperaturbereich starken Beanspruchungen bei gleichzeitigen Schwingungen und Stößen ausgesetzt ist und dennoch eine lange Lebensdauer aufweisen soll. Von diesen Drehzahlsensoren wird die Drehzahl eines umlaufenden Körpers in drehzahlproportionale elektrische Signale umgesetzt, die der Ansteuerung von elektronischen Drehzahlmessern und Tachometern, sowie von Regel- und Steuerungssystemen dienen. Von den je nach ihrer Wirkungsweise bezeichneten Sensoren interessieren hier im wesentlichen die Hall- und die Reedkontaktgeber, Impulsdrähte oder andere magnetische Schaltelemente, weil durch Magnetfeldänderungen des umlaufenden Körpers die drehzahlproportionalen elektrischen Signale hervorgerufen werden.

Bei zahlreichen Anwendungen,insbesondere beim Kraftfahrzeug haben einige Wellen und ähnliche Gegenstände, deren Drehzahl abgefühlt werden soll, einen großen Durchmesser von einigen Zentimetern; dementsprechend ist der Umfang des scheiben- oder kreisringförmigen, permanent-magnetischen Rotationskörpers, an dem in gleichmäßigem, gegenseitigem Abstand die Folge der Polpaare wirksam ist, mehr als $\pi$-mal so lang, so daß diese Umfangslänge in den Bereich von mehr als 10 oder 20 cm fällt, womit eine nicht unbeträchtliche Masse des permanent-magnetischen Materials aufgewendet werden muß, aus dem der permanent-magnetische Rotationskörper besteht. Zusätzlich zu den raltiv hohen Kosten dieses Magnetmaterials wird insbesondere bei einem plötzlichen Bremsvorgang oder bei Stößen das gesamte Kraftfahrzeug durch die dann wirksam werdende träge Masse des Rotationskörpers belastet.

Der Erfindung liegt die Aufgabe zugrunde, einen Rotationskörper der eingangs bezeichneten Art unter Verwendung von möglichst wenig permanent-magnetischem Material auszubilden, ohne Einbußen an elektrischer Ausgangsleistung des betreffenden Gebers hinnehmen zu müssen.

Diese Aufgabe wird erfindungsgemäß dadurch gelöst, daß der Rotationskörper zumindest zwei permanent-magnetische Einsatzstücke mit einer einzigen axial bzw. radial zur Welle verlaufenden, gleichförmigen Magnetisierungsrichtung enthält, und daß die Breite dieser Einsatzstücke 15 bis 85 % eines etwa durch ihre Mitte gelegten Kreisumfanges entspricht.

Ausführungsbeispiele der Erfindung sind in der Zeichnung dargestellt und werden im folgenden ausführlich erläutert. Es zeigen:

Figur 1 den Rotationskörper gemäß der Erfindung in der Draufsicht,

Figur 1A den Rotationskörper der Figure 1, wobei jedoch die Magnetisierungsrichtung der Permanentmagnete um 90° gedreht und in die Zeichenebene hineingelegt ist,

die Figuren 2 und 2A jeweils einen Schnitt längs der Linie 1-1 der Figure 1 bzw. 1A und

Figur 3 einen mit dem Rotationskörper der Figure 1 bzw. 1A gewonnenen Signalverlauf des Drehzahlgebers.

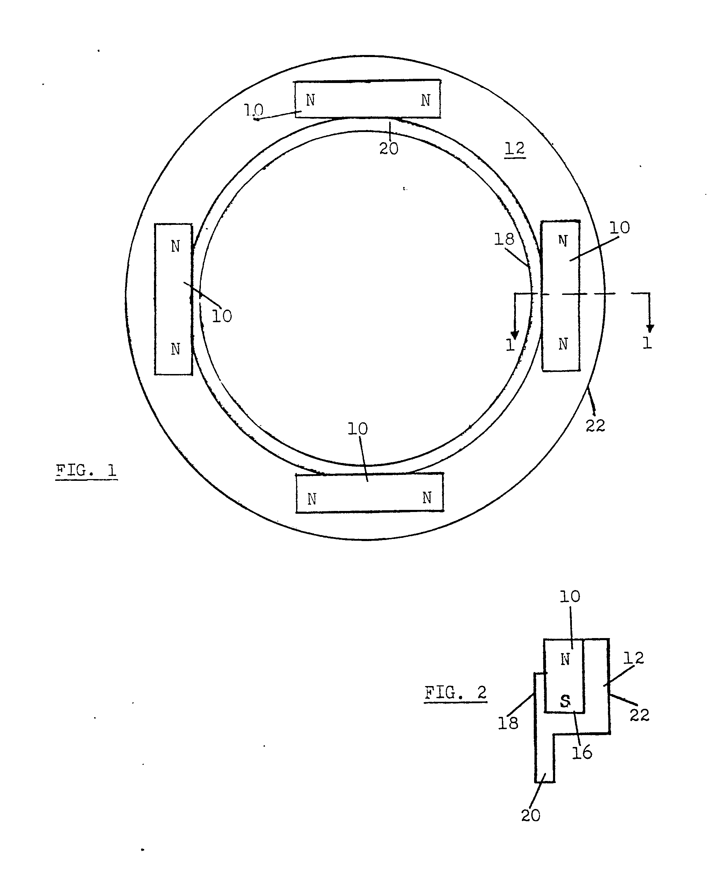

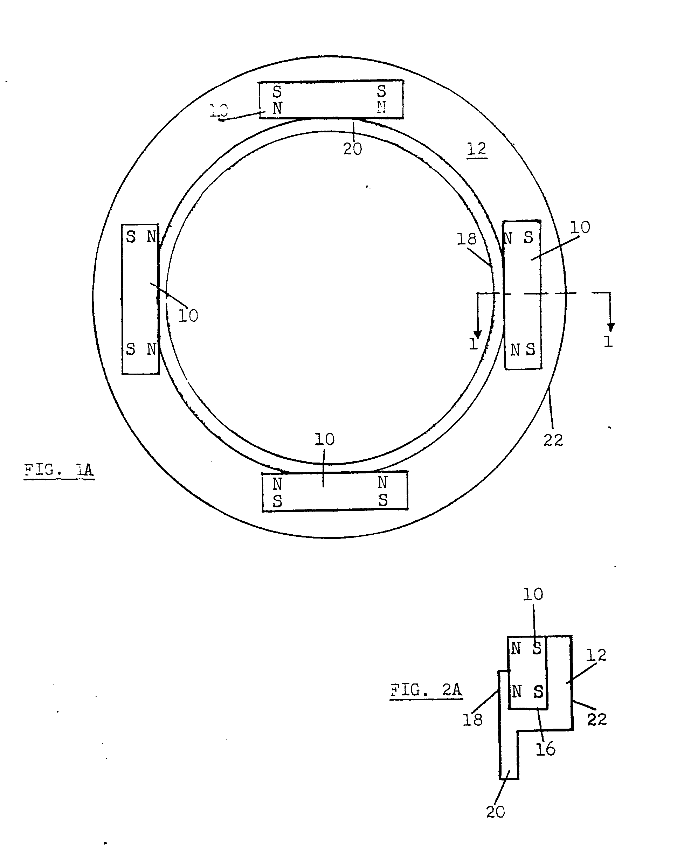

Wie aus den Figuren 1 und 1A zu ersehen ist, enthält ein Rotationskörper 12 für Drehzahlsensoren, insbesondere für Hall- und Reedkontaktgeber und andere magnetische Schaltelemente einen unmagnetischen Kreisringkörper vorzugsweise aus einem leichten, harten und bruchfesten Kunststoff und vier in diesen eingelassene quaderförmige Permanentmagnete 10, die, wie aus den Figuren 2 und 2A hervorgeht, jeweils in einer Vertiefung 16 des Rotationskörpers 12 befestigt sind.

Um die Drehzahl einer Welle erkennen zu können, wird der Rotationskörper 12 über das eine Ende der Welle bis in die gewünschte Position aufgeschoben oder in etwa zwei gleiche Hälften zerlegt, die an der betreffenden Stelle um den Umfang der Welle herumgelegt und befestigt werden.

Obgleich in den Figuren 1 und 1A vier Permanentmagnete 10 gezeigt sind, können auch weniger, also bis zu zwei oder mehr quaderförmige Permanentmagnete 10 in einem gleichförmigen, gegenseitigen Abstand rund um den Umfang der Welle angebracht sein. Die Polbreite, das ist die Gesamtlänge aller je einen Permanentmagnet 10 bildenden Einsatzstücke, die jeweils einem Segment des Kreisringkörpers nahekommen, längs eines etwa durch die Mitte aller Segmente gelegten Kreises in Umfangsrichtung gemessen, kann zwischen 15 und 85 % liegen, bezogen auf die Länge des Gesamtumfanges des zuvor genannten Kreises. Bei den dargestellten Ausführungsformen der Figuren 1 und 1a ist eine Polbreite von 45 % gewählt.

Wie aus der Draufsicht der Figur 1 und der Schnittansicht der Figur 2 deutlich hervorgeht, sind gemäß der Erfindung alle Permanentmagnete 10 in der Weise vormagnetisiert, daß ihr Nordpol N oben und folglich in der Sichtfläche der Figur 1 und zugleich ihr Südpol S unten liegt. Im Hinblick darauf, daß sich die Rotationskörper 12 in den Figuren 1 und 1A bzw. 2 und 2A allein durch die Magnetisierungsrichtungen ihrer Permanentmagnete 10 unterscheiden sollen, liegt bei der Ausführungsform der Figuren 1A und 2A der Nordpol N unmittelbar an der für die Welle (nicht gezeigt) vorgesehenen Mittelöffnung des Rotationskörpers 12, während der Südpol S entsprechend nach außen gekehrt ist.

Es ist wohl einleuchtend, daß bei allen Permanentmagneten 10 der dargestellten Ausführungsformen die Magnetisierungsrichtungen umgekehrt, das heißt, die Nordpole N gegen die Südpole S bzw. die Südpole S gegen die Nordpole N ausgetauscht werden können. Obgleich in den Figuren 1, 1A, 2 und 2A die Permanentmagnete quaderförmig wiedergegeben sind, können sie auch in der Weise gebogen sein, daß ihre innere und äußere Breitseite konzentrisch in bezug auf den Mittelpunkt der Welle (nicht gezeigt) gekrümmt ist, sie also Ausschnitte aus einem Kreiszylindrmantel darstellen.

Dem in den Figuren 1, 1A und 2, 2A gezeigten Rotationskörper 12 sind die folgenden errechneten Abmessungen zugrundegelegt:

| | | |
|---|---|---|
| Außendurchmesser des Kreisringkörpers | 57 | mm |
| Innendurchmesser des Kreisringkörpers | 48 | mm |
| Höhe des Kreisringkörpers (ohne Flansch 20) | 7 | mm |
| Meßhöhe | 0,0 | mm |
| Meßradius | 33,5 | mm |
| Polbreite | 45 % | |
| Polzahl | 4 | |
| remanente magnetische Induktion B (in Tesla) | 0,34 | T |

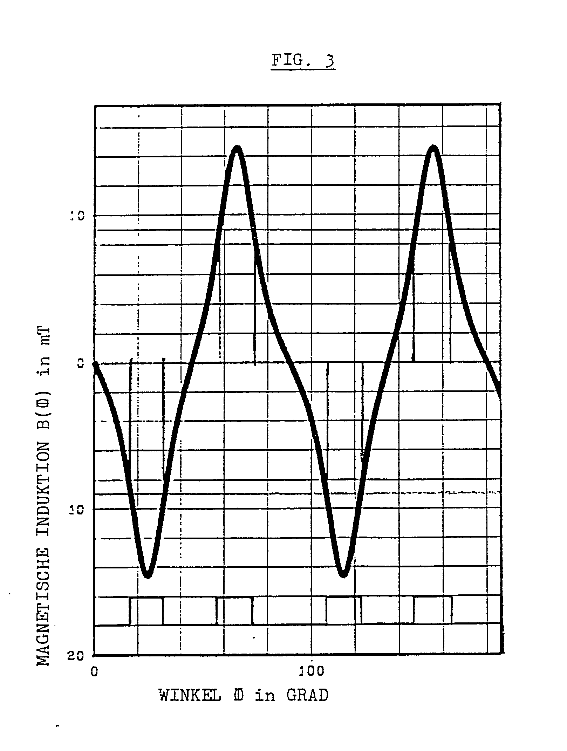

In Figur 3 ist in Form einer wellenartigen Kurve der Verlauf der magnetischen Induktion B in mT (= Millitesla) in einem Bereich des Drehwinkels $\phi$ zwischen 0° und 180° aufgetragen, wobei der Bereich von 180° bis 360° wegen der symmetrischen Anordnung der Permanentmagnete 10 mit dem Bereich zwischen 0° und 180° übereinstimmt. Unterhalb der wellenartigen Kurve sind die aus ihr gewon nenen elektrischen Rechteckimpulse über denselben Drehwinkeln aufgetragen.

Bei einem Blick auf die Verteilung der Permanentmagnete 10 in Umfangsrichtung des Kreisringkörpers könnte angenommen werden, daß sich wegen des Vorhandenseins von nur vier Polen N der Permanentmagnete 10 bei einer vollen Drehung des Kreisringkörpers (360°) maximal vier elektrische Impulse ableiten lassen.

Gemäß der Erfindung ergeben sich jedoch insgesamt acht Impulse, von denen wegen der Wiedergabe einer halben Drehung (180°) in Figur 3 nur vier erscheinen, in der Zuordnung der magnetischen Induktion B zu den elektrischen Impulsen über dem Winkel $\phi$ aufgetragen ist.

Bei der Anordnung der Permanentmagnete 10 und den zugehörigen Magnetisierungsrichtungen gemäß den Figuren 1, 1A bzw. 2, 2A sei beachtet, daß die Längsausdehnung eines nahe am Rotationskörper 12 angebrachten Magnetfeldtasters und -wandlers (nicht gezeigt) in der Magnetisierungsrichtung verlaufen muß, um ein bezüglich der möglichen Winkelstellungen maximales elektrisches Ausgangssignal abgreifen zu können.

Prinzipiell läßt sich der Signalverlauf gemäß der Figur 3 auch an einer weiteren abgeänderten Ausführungsform erzielen, die dadurch erhalten wird, daß der Rotationskörper 12 in der Mitte zwischen zwei Permanentmagneten 10 durchtrennt und dann so stark gestreckt wird, bis seine äußere und innere Umfangsfläche zwei zueinander parallele ebene Flächen bilden. Diejenige, die ursprünglich die innere Umfangsfläche war, kann dann auf der ebenen Oberfläche eines Gegenstandes festgemacht werden, dessen Geschwindigkeit von einem Magnetfeldtaster oder -wandler abgefühlt werden kann.

## Ansprüche

1. Kreisringförmiger Rotationskörper an einer Welle von einigen Zentimetern Durchmesser für Drehzahlsensoren, bei dem längs einer Kreisbahn in konstantem Abstand permanente Magnetpole wirksam sind, dadurch gekennzeichnet, daß der Rotationskörper (12) zumindest zwei permanent-magnetische Einsatzstücke (10) mit einer einzigen axial bzw. radial zur Welle verlaufenden, gleichförmigen Magnetisierungsrichtung enthält, und daß die Breite dieser Einsatzstücke (10) 15 bis 85 % eines etwa durch ihre Mitte gelegten Kreisumfanges entspricht.

2. Rotationskörper nach Anspruch 1, dadurch gekennzeichnet, daß zur Erzielung eines günstigen Impulsverhältnisses die Breite der Einsatzstücke (10) 45 % der Länge des durch ihre Mitte gelegten Kreisumfanges entspricht.

3. Rotationskörper nach Anspruch 1, dadurch gekennzeichnet, daß die Einsatzstücke (10) die Gestalt eines Quaders aufweisen, dessen größte Dimension in Umfangsrichtung des Rotationskörpers (12) verläuft.

4. Rotationskörper nach Anspruch 1, dadurch gekennzeichnet, daß zur Verringerung des Trägheitsmomentes die Einsatzstükke (10) die Gestalt eines Ausschnittes aus dem Mantel eines kreisförmigen Zylinders aufweisen, dessen Achse mit der der Welle zusammenfällt.

5. Rotationskörper nach Anspruch 1, dadurch gekennzeichnet, daß er (12) zum größten Teil aus einem leichten, harten, bruchfesten Kunststoff geformt ist.

6. Rotationskörper nach Anspruch 3 oder 4, dadurch gekennzeichnet, daß die Dimension der Einsatzstücke (10) in Richtung ihrer permanenten Magnetisierung weniger als halb so groß wie in Umfangsrichtung des Rotationskörpers (12) ist.

7. Körper zur Ermittlung der Geschwindigkeit eines auf einer geradlinigen Bahn bewegten Gegenstandes unter Verwendung des Rotationskörpers nach einem der vorhergehenden Ansprüche, dadurch gekennzeichnet, daß der Rotationskörper (12) zwischen zwei Einsatzstücken (10) durchtrennt und so stark gestreckt ist, daß seine beiden Umfangsflächen (18 und 22) zwei zueinander parallele, ebene Flächen darstellen, von denen die eine (18 oder 22) an einer Fläche des Gegenstandes befestigbar ist.

FIG. 1

FIG. 2

FIG. 1A

FIG. 2A

FIG. 3

WINKEL Φ in GRAD

| | Europäisches Patentamt | **EUROPÄISCHER RECHERCHENBERICHT** | Nummer der Anmeldung |
|---|---|---|---|
| | | | EP 88 11 3290 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 422 167 (E.T.R.I.) * Seite 4, Zeile 13 - Seite 5, Zeile 4; Seite 5, Zeilen 29-34; Figuren 2-7 * | 1,5 | G 01 P 3/487 |
| Y | | 4 | |
| | --- | | |
| Y | PATENT ABSTRACTS OF JAPAN, Band 10, Nr. 135 (P-457)[2192], 20. Mai 1986; & JP-A-60 256 064 (MITSUBISHI DENKI K.K.) 17-12-1985 * Insgesamt * | 4 | |
| | --- | | |
| A | DE-C-1 138 240 (SIEMENS) * Spalte 3, Zeile 47 - Spalte 4, Zeile 30; Figuren 1-3 * | 1,5 | |
| | --- | | |
| A | US-A-4 107 601 (BARMEIER, Jr. et al.) * Spalte 2, Zeile 49 - Spalte 3, Zeile 20; Figuren 1,2 * | 1,7 | |
| | --- | | |
| A | DE-A-3 109 586 (MÄUSEZAHL) * Seite 4, Zeilen 1-23; Figuren 1,2 * ----- | 7 | **RECHERCHIERTE SACHGEBIETE (Int. Cl.5)** G 01 P G 01 D |

Der vorliegende Recherchenbericht wurde für alle Patentansprüche erstellt

| Recherchenort | Abschlußdatum der Recherche | Prüfer |
|---|---|---|
| DEN HAAG | 08-11-1989 | HANSEN P. |